# EUROPEAN PATENT APPLICATION

(11) **EP 1 061 620 A1**
(43) Date of publication of application: **20.12.2000**
(21) Application number: 00201848.9
(22) Date of filing: 25.05.2000
(51) Int. Cl.: H02B 1/30

(54) **Electric switchboard with a casing of improved type**

(30) Priority: 15.06.1999 IT PN990050
(71) Applicant: Elleci S.p.A., 33080 Porcia (PN) (IT)
(72) Inventor: Corazza, Claudio, 33080 Porcia (PN) (IT)
(74) Representative: Da Riva, Ermanno

(57) **Abstract**

The invention relates to an electric switchboard ( 10 ) of cabinet-type which is able to house one or more panels or frames for supporting the electric apparatuses.

The perimetrical edge ( 19 ) of the frontal opening of the electric switchboard ( 10 ) is essentially curvilinear and its convex surface delimites the size of the frontal opening of the electric switchboard ( 10 ).

In such a manner, are helped all the assembly, inspection and maintenance operations performed manually whether in the manufacturing stage or , as often as not, during the use of the electric switchboard ( 10 ).

## Description

The invention relates to an electric switchboard having an outer box of improved type. In particular, the invention relates to an electric switchboard of box-type whose access opening is provided with a peripheral edge which is so shaped as to increase the structural strength of the outer box and to simplify as well as to rationalize the execution of the manufacturing, inspection and maintenance operations of the same electric switchboard.

As it is known, the electrical systems begin immediately after the metering apparatuses or meters of the electricity supplied by the public electric grid.

A general switchboard is usually installed after the eletricity meters and it is composed of a metallic supporting structure on which are installed the apparatuses for inspecting, measuring, controlling, protecting and regulating the circuitry of the electric system.

Secondary electric switchboards can also be installed in addition to the general electric switchboard in order to controll the electricity supply in various circuits and branch-circuits of the electric wiring system.

According to the outer conformation, the electric switchboards can be of open type, open with a frontal guard type, closed type, cabinet type, bench type and closed box type.

In particular, the electric switchboards of closed box-type are anchored to a vertical wall and are composed essentially of a parallelepiped fitment or box whose frontal quadrangular opening can be provided with a closing door.

The inside of the fitment houses one or more panels or frames for supporting the apparatuses and the various structural supporting and fastening components ( such as casings, closing plates, diaphragmatic plates et cetera ) of the various apparatuses ( such as the master switch and the divisional switches ).

The manufacturing process of the fitment or of the box is usually made by cutting, bending and welding processes of metal sheet which are so well known by a person skilled in the art that they do not require further descriptions.

The perimetrical edge of the frontal opening of the box is usually obtained by bending, outwards or towards the inside of the box, the frontal edges of the metal sheets forming the two lateral sides, the upper wall or sky and the lower wall or bottom of the box.

The bending at right or acute angles of the perimetrical edge of the frontal opening presents the following disadvantages.

The first disadvantage is to be found in the matter that the metal sheets, near to the angled bending, have a rigidity and a shock resistance which are not uniformly distributed and decrease in inverse relation to the increase of the distance from the bending zone.

Therefore, accidental shocks or forcings can damage and deform the free edge of the frontal opening to the extent of involving the malfunction of the closing door.

A further disadvantage arising from the almost orthogonal bending of the perimetrical edge of the frontal opening derives from the fact that it interferes with the painting operations during the manufacturing stage of the box and it complicates all the assembly ( such as the welding operation ), inspection and maintenance operations performed manually whether in the manufacturing stage or , as often as not, during the use of the electric switchboard.

In particular, the angled contour of the perimetrical edge of the frontal opening obstructs a correct powder painting of the inner bending angles which, on this account, often require additional, irrational and expensive retouching operations.

Moreover, the workers employed in assembly, disassembly and handling operations of the panel or of the supporting frame of the electric apparatuses are dangerously exposed to injuries and abrasions caused by working with their hands and arms into close contact with the sharp edge of the frontal opening.

Therefore, the main object of the present invention is to overcome, in a simple and rational way, the above stated restrictions and drawbacks by means of an electric switchboards of box-type having the perimetrical edge of the frontal opening shaped in such a way as to have a better structural rigidity, to allow a correct and uniform painting of its inner parts and to simplify the carrying out of the operations performed manually or automatically whether in the manufacturing stage of the electric switchboard ( such as the manual and/or robotized welding operation ) or during the use of the same electric switchboard.

These and other objects are attained according to the invention by an electric switchboard having the hereinafter claimed features.

The objects and the features of the electric switchboard according to the invention will appear clear from the following description with reference to the accompanying drawing, wherein:
- the figure 1 is a perspective view of the outer box of an electric switchboard acording to the present invention;
- the figure 2 shows a front view of the box of the figure 1 without the relative closing door;
- the figure 3 is a longitudinal sectional view, taken along the sectional line III-III, of the box of the figure 2;
- the figures 4, 5, 6, 7 are respective views, on a larger scale, of the particulars marked with the letters A - B - C - D in the figure 1.

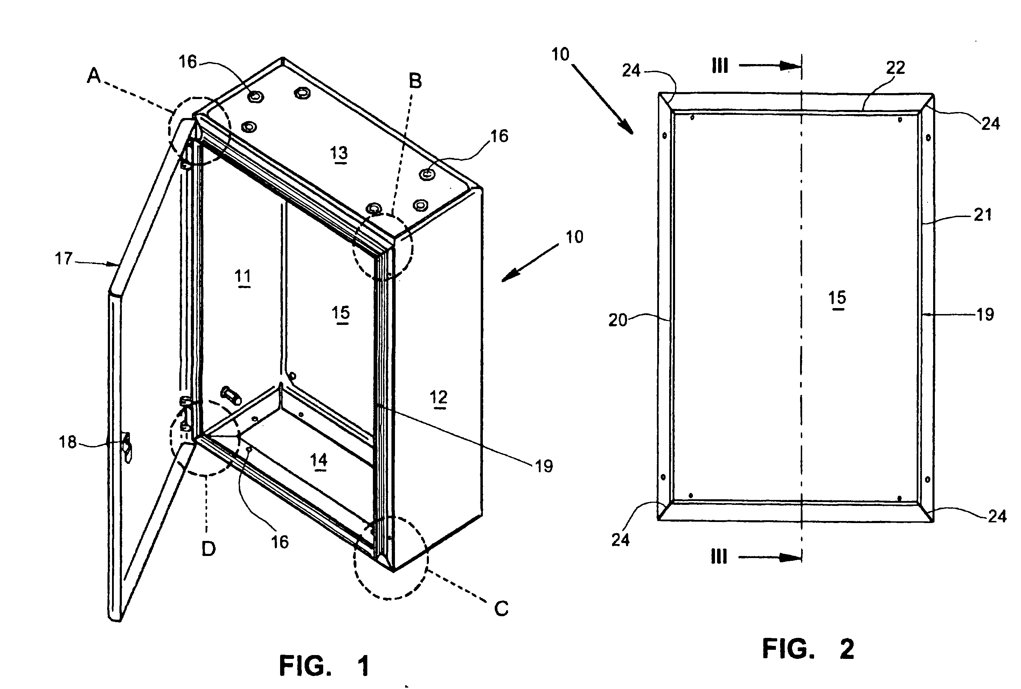

In the figure 1 it is shown an electric switchboard 10 of closed box-type comprising a parallelepiped-shaped outer fitment made by cutting, pressing and bending processes of metal sheets which are so sufficiently well known as not to require further details.

The fitment or outer box of the electric switchboard 10 comprises essentially two lateral walls 11, 12, an upper wall or sky 13, a lower wall or bottom 14 and a rear wall 15.

In a per se known way , the sky 13, the bottom 14 and the rear wall 15 present a central portion which is removably connected to the structure of the fitment by means of usual screw systems 16 whether for allowing the passage of cablings which are oriented towards several directions or for allowing the side-by-side , back-to-back or over-under self-assembly of the electric switchboard 10 together with other electric switchboards.

The frontal opening of the electric switchboard 10 presents a usual quadrangular form and it is guarded by a closing door 17 which is pivotally mounted about an horizontal axis and equipped, in a per se known way, with a locking device 18.

The closing door 17 and the relative lock 18 are intended to stop the infiltration of extraneous bodies, to permit the access to the electric switchboard 10 only to the personnel employed in working, surveillance and maintenance of the electrical system and to prevent unauthorized persons from operating, also unintentionally, the various electrical apparatuses.

On the inside of the electric switchboard 10 is housed a panel or frame for supporting the electric apparatuses which is not shown in the figures for reasons of descriptive clarity and because it is so sufficiently well known as not to require further details.

Suffice it to say that the apparatuses are usually mounted on the panel or supporting frame so as to facilitate their manipulation by the working personnel and that the panel or supporting frame is removably connected to the electric switchboard 10 by means of known bayonet fittings.

It is to be pointed out that the perimetrical edge 19 ( figure 1 ) of the frontal opening of the electric switchboard 10 according to the invention is essentially curvilinear and its convex surface delimites the size of the frontal opening of the electric switchboard 10.

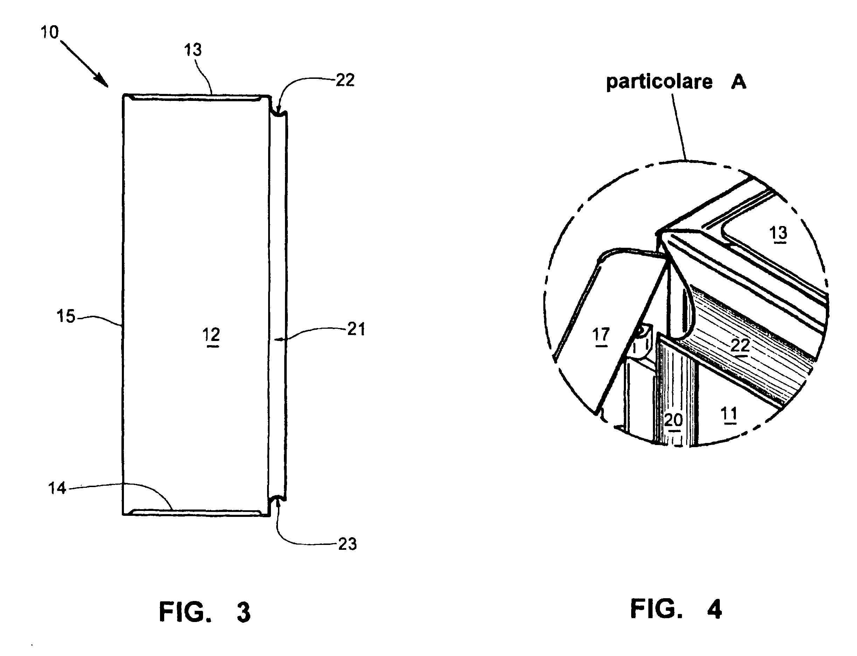

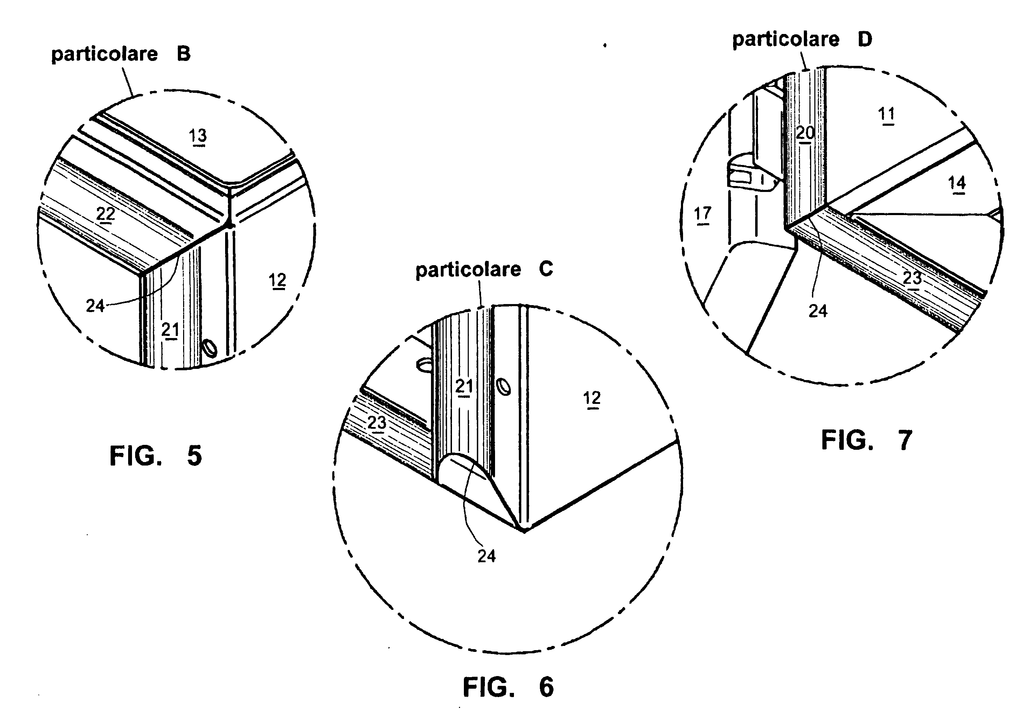

In particular, the frontal edges 20, 21, 22, 23 ( figures 2, 3, 4, 5, 6, 7 )of the box of the electric switchboard 10, of both the lateral walls 11,12, of the upper wall or sky 13 and of the bottom wall 14 respectively, are shaped ,by means of known stamping processes, with a cross section following a curved contour and the convex surface of each frontal edge 20, 21, 22, 23 is specularly turned toward the convex surface of the opposite frontal edge. The ends 24 of each frontal edge 20, 21, 22, 23 are cut obliquely at an angle of 45° for allowing their corner junction with the ends of the adjacent frontal edges.

During the assembly stage of the box, the contiguous sides of the lateral walls 11, 12, 15 and of the horizontal walls 13, 14 are at first brought close together and, upon checking the correct junction points of the oblique ends 24 of the frontal edges 20, 21, 22, 23, are joined together by means of usual welding processes.

From what stated it is clear that the electric switchboard 10 according to the present invention allows to overcome the above described drawbacks of the usual electric switchboards.

As a matter of fact, the curved shaping of the frontal edges 20, 21, 22, 23 gives to the perimetrical edge of the opening of the electric switchboard 10 a structural rigidity and a shock resistance which are evenly distributed in the whole surface and, by consequence, it minimizes the possibility of damages or deformations caused by accidental impacts and forcings.

A further advantage deriving from the curved shaping of the frontal edges 20, 21, 22, 23 is the fact that it facilitates the painting operations during the manufacturing of the fitment.

In particular, the curved surface of the perimetrical edge of the frontal opening develops vortical air flows which are doing good to the correct distribution of the paint also in the inner bending zones of the perimetrical edge 19 of the frontal opening of the electric switchboard 10.

In this way, there is the advantage to avoid all the expensive and irrational retouching operations which are often required in the traditional electric switchboards.

A further advantage arising from the curved shaping of the perimetrical edge 19 of the frontal opening of the box is to be found in the fact that it facilitates all the assembly, inspection and maintenance operations performed manually whether in the manufacturing stage or, as often as not, during the use of the electric switchboard.

In fact, the workers employed in assembly, disassembly and handling operations of the panel or of the supporting frame of the electric apparatuses can operate with their hands and arms into close contact with the curved edge without taking the risk of injuries and abrasions.

It is well understood that modifications and variations may be made to the electric switchboard 10 forming object of the present invention without departing however from the scope defined by the following claims.

For instance, the perimetrical edge 19 of the frontal opening in the electric switchboard 10 could be realized in a separate manner with respect to the walls 11, 12, 13, 14 of the electric switchboard 10, as well as it could be made of a material which is different from the metal sheet ( such as made of a shockproofing, uninflammable and not conductive material ) and successively inserted on the sides of the frontal opening of the electric switchboard 10.

## Claims

1. Electric switchboard ( 10 ) of closed box-type comprising a parallelepiped-shaped box housing one or more panels or frames for supporting the electric apparatuses and presenting a quadrangular-shaped frontal opening and a closing door ( 17 ), said fitment or box being realized by means of known metal sheet cutting, bending and welding processes , or by means of plastic sheet molding, during which the frontal edges of these sheets are bent towards the outside or the inside of the fitment in order to form the perimetrical edge of said frontal opening of the electric switchboard ( 10 ), characterized in that the perimetrical edge ( 19 ) of the frontal opening of the electric switchboard ( 10 ) is essentially curvilinear and its convex surface delimites the size of the frontal opening of the electric switchboard ( 10 ).

2. Electric switchboard ( 10 ) according to the claim 1, characterized in that the frontal edges ( 20, 21, 22, 23 ), of the box of the electric switchboard ( 10 ), of both the lateral walls ( 11,12 ), of the upper wall or sky ( 13 ) and of the bottom wall ( 14 ) respectively, are shaped ,by means of known stamping processes, with a cross section following a curved contour and the convex surface of each frontal edge ( 20, 21, 22, 23 ) is specularly turned toward the convex surface of the opposite frontal edge.

3. Electric switchboard ( 10 ) according to the claim 1, characterized in that the perimetrical edge ( 19) of the frontal opening of the electric switchboard ( 10 ) is realized as a separate part and in a separate manner with respect to the walls ( 11, 12, 13, 14 ) of the electric switchboard ( 10 ) and it is successively inserted on the sides of the frontal opening of the electric switchboard ( 10 ) by means of known fixing sistems.

4. Electric switchboard according to the claims 1 and 3, characterized in that said perimetrical edge ( 19) of the frontal opening of the electric switchboard ( 10 ) is made of a shockproofing, uninflammable and not conductive material.
